# EUROPEAN PATENT SPECIFICATION

(11) **EP 3 619 939 B1**
(45) Date of publication and mention of the grant of the patent: **01.01.2025**
(21) Application number: 18794188.5
(22) Date of filing: 03.05.2018
(51) Int. Cl.: H04W 24/08, H04W 24/10, H04W 72/04, H04W 8/22

(54) **GAPLESS MEASUREMENT FOR BANDWIDTH LIMITED/COVERAGE ENHANCEMENT USER EQUIPMENT**
LÜCKENLOSE MESSUNG FÜR BANDBREITENBESCHRÄNKTE/REICHWEITENVERSTÄRKTE BENUTZERGERÄTE
MESURE SANS INTERVALLE POUR ÉQUIPEMENT UTILISATEUR À BANDE PASSANTE LIMITÉE/AMÉLIORATION DE COUVERTURE

(30) Priority: 04.05.2017 US 201762501402 P
(43) Date of publication of application: 11.03.2020
(73) Proprietor: Nokia Technologies Oy, 02610 Espoo (FI)
(72) Inventor: ZHANG, Li, Chaoyang District, Beijing 100102 (CN); DALSGAARD, Lars, 90230 Oulu (FI); KOSKINEN, Jussi-Pekka, 90420 Oulu (FI)
(74) Representative: Page White Farrer
(86) International application number: PCT/FI2018/050320
(87) International publication number: WO 2018/202950

(56) References cited:
- US-A1- 2013 308 481
- US-A1- 2013 308 481
- US-A1- 2015 312 787
- US-A1- 2017 064 578
- US-B2- 9 467 885
- INTEL CORPORATION: "Gapless intra-frequency monitoring for FeMTC", vol. RAN WG4, no. Ljubljana, Slovenia; 20161010 - 20161014, 9 October 2016 (2016-10-09), XP051152380, Retrieved from the Internet <URL:http://www.3gpp.org/ftp/Meetings_3GPP_SYNC/RAN4/Docs/> [retrieved on 20161009]
- NOKIA ET AL: "Need for gap in Cat-M1 intra-frequency measurement", vol. RAN WG4, no. Ljubljana; 20161010 - 20161014, 19 October 2016 (2016-10-19), XP051164320, Retrieved from the Internet <URL:http://www.3gpp.org/ftp/tsg_ran/WG4_Radio/TSGR4_77/Docs/> [retrieved on 20161019]

## Description

### BACKGROUND:

### Field:

Various communication systems may benefit from measurement of communication parameters. For example, certain wireless communication systems may benefit from gapless measurement for a bandwidth limited (BL) / coverage enhancement (CE) user equipment (UE).

### Description of the Related Art:

In release 13 (Rel-13) enhanced machine-type communication (eMTC), requirements for intra-frequency measurement, including both serving cell and neighbor cell measurement, are applicable only when a UE is configured with measurement gaps. This is because when working in coverage enhancement mode, a UE is very likely to be tuned to a different narrow band of 6 physical resource blocks (PRB) than the central 6-PRB, which the UE needs to monitor for neighbor cell detection, for example for acquisition of primary synchronization signal (PSS) / secondary synchronization signal (SSS). Measurement gaps are then provided for UE for enabling measurements, and this was made as the side condition for measurement requirements. In other words, the requirements only apply if the UE is configured with a measurement gap pattern.

Active measurement gap patterns, such as 6 ms gap lengths repeated every 40 or 80 ms, can take resources from data transmission and can have limitations on certain services like voice over internet protocol (VoIP) in eMTC.

INTEL CORPORATION: "Gapless intra-frequency monitoring for FeMTC" (R4-167285) provides recommendation to enable gapless intra-frequency monitoring for FeMTC devices.

NOKIA ET AL: "Need for gap in Cat-M1 intra-frequency measurement" (R4-168264) provides a view on the need for gap in Cat-M1 intra-frequency measurement.

US2013/308481A1 provides techniques for performing at least one measurement on at least a first cell and a second cell.

### SUMMARY:

According to a first aspect, a method can include determining whether a user equipment needs gaps for measurement. The method can further include conditionally instructing the user equipment regarding gapless measurement based on the determination.

In a variant, the method can include determining whether a serving cell is able to schedule uplink and downlink transmissions for the user equipment without gaps.

In a variant, the method can also include requesting a user equipment to provide the user equipment's radio access capability.

In a variant, the method can also include receiving an indication of the user equipment's radio access capability in response to the request.

In a variant, the radio access capability can include support for gapless measurement for a serving cell.

In a variant, the method can include instructing the user equipment regarding gapless measurement for an identified reporting configuration from which a user equipment can determine that the user equipment is not required to provide any measurement reporting for any neighbor cell.

In a variant, the method can include receiving a confirmation from the user equipment that measurement has been reconfigured based on the instruction.

In a variant, the determining can be based on whether the user equipment is configured to measure only a serving cell.

According to a second aspect, a method can include receiving instructions from a serving cell regarding performing gapless measurement. The method can further include reconfiguring measurement based on the instructions.

In a variant, the method can also include providing an indication of a radio access capability of the user equipment to the serving cell.

In a variant, the method can also include receiving a request for the radio access capability of the user equipment. The indication of the radio access capability of the user equipment can be provided as a response to the request.

In a variant, the radio access capability can include support for gapless measurement for the serving cell.

In a variant, the instructions can be for an identified reporting configuration from which a user equipment can determine that the user equipment is not required to provide any measurement reporting for any neighbor cell.

In a variant, the method can further include sending a confirmation from the user equipment that measurement has been reconfigured based on the instruction.

In a variant, the reconfiguring can include configuring the user equipment to measure a single narrow band which is for a first physical channel.

In a variant the first physical channel can be a machine type communication physical downlink control channel.

In a variant, the reconfiguring can include configuring the user equipment to measure multiple narrow bands for monitoring a first physical channel and receiving a second physical channel when the user equipment is scheduled with the second physical channel.

In a variant, the first physical channel can be a machine type communication physical downlink control channel and the second channel can be a physical downlink shared channel.

In a variant, the reconfiguring can include configuring the user equipment to measure a single narrow band or multiple narrow bands for reception of a physical channel.

In a variant, the physical channel can be a physical downlink shared channel.

In a variant, the reconfiguring can include configuring the user equipment to measure a single narrow band for one of monitoring a first physical channel or receiving a second physical channel.

In a variant, the first physical channel can be a machine type communication physical downlink control channel and the second physical channel can be a physical downlink shared channel.

According to third and fourth aspects, an apparatus can include means for performing the method according to the first and second aspects respectively, in any of their variants.

According to fifth and sixth aspects, an apparatus can include at least one processor and at least one memory including computer program code. The at least one memory and the computer program code can be configured to, with the at least one processor, cause the apparatus at least to perform the method according to the first and second aspects respectively, in any of their variants.

According to seventh and eighth aspects, a computer program product may encode instructions for performing a process including the method according to the first and second aspects respectively, in any of their variants.

According to ninth and tenth aspects, a non-transitory computer readable medium may encode instructions that, when executed in hardware, perform a process including the method according to the first and second aspects respectively, in any of their variants.

According to eleventh and twelfth aspects, a system may include at least one apparatus according to the third or fifth aspects in communication with at least one apparatus according to the fourth or sixth aspects, respectively in any of their variants.

The invention relates to a user equipment a method and a computer program product as set forth in the claims. It will be understood that aspects of this disclosure falling outside the scope of the claims are not part of the invention but may be helpful to understand the invention.

### BRIEF DESCRIPTION OF THE DRAWINGS:

For proper understanding of the disclosure, reference should be made to the accompanying drawings, wherein:
Figure 1 illustrates a signaling example, according to certain aspects.
Figure 2 illustrates a method according to certain aspects.
Figure 3 illustrates a system according to certain aspects.
Figure 4 illustrates another method according to certain aspects.

### DETAILED DESCRIPTION:

In order to reduce the impact from active measurement gaps, or for other reasons, it may be desirable to reduce the time when gaps are active and thereby reduce the impact of gaps as much as possible. Certain aspects provide an approach to enable gapless measurement of serving cell for a bandwidth limited (BL) / coverage enhancement (CE) user equipment (UE). Certain aspects also provide a way to enable power saving when a capable UE performs gapless measurement of neighbor cells.

Thus, certain aspects may enable gapless measurement as much as possible, in order to improve the spectral efficiency, as the subframes taken by unnecessary gaps are purely wasted. Likewise, particular user equipment may consume more power in order to do gapless measurement for neighbor cells, and certain aspects may provide further steps or mechanisms to enable power saving even in such cases.

In theory, the gaps are needed only for neighbor cell detection. Thus, one approach may be to require a user equipment to do serving cell measurement without gaps. However, there are at least three technical details that may be addressed in defining the requirement for gapless serving cell measurement.

First, the conditions can be defined under which the UE is to fulfil a gapless measurement requirement. So far, the UE measurement behavior and requirements were the same for all intra-frequency cells, including serving cell and neighbor cells, and have no dependence on the measurement configuration. Thus, such new conditions may be different from the previous approach.

Second, the measurement behavior can be defined in terms of which subframe and narrow band(s) the UE is to measure, and the related measurement requirements for such given subframe and narrow band(s). The UE may be tuned to different narrow bands during the measurement period. For example, the UE may be tuned to different narrow bands for machine type communication (MTC) physical downlink control channel (MPDCCH) monitoring and physical downlink shared channel (PDSCH) reception. In addition, frequency hopping can be enabled for MPDCCH or PDSCH. Thus, the UE may not be tuned to a single narrow band for the measurement period, and thus may have insufficient measurement opportunities.

Third, the capability of different UEs to fulfil a gapless measurement requirement may be taken into account. Not all UEs may have the same capability in this regard.

There may be at least two cases where a BL/CE can do gapless measurement for a neighbor cell. One is that UE has a spare radio frequency (RF) chain. This may be applicable to both BL and CE UEs. The other is that the UE activates a wider RF than 6-PRB narrow band when performing measurement. This may be applicable to CE UE as those UEs have as wide RF bandwidth (BW) as the system BW.

To perform gapless measurement the UE may have to keep the spare RF ON for the first case mentioned above, or keep the RF chain in wide band (WB) mode for the second case mentioned above. Thus, in both cases, the power consumption would be increased, despite the fact that battery life may be important, for example, in machine type communication (MTC) design.

In order to reduce the UE power consumption caused by such measurements, one approach would be to enable and permit the UE to turn on/off its second receiver. Such an adaptive approach may introduce interrupts into the communication.

Certain aspects, therefore, provide a detailed framework to enable a UE to do gapless measurement for a serving cell. For example, the UE measurement behavior and requirement(s) can be dependent on the measurement configuration from the network. Specifically, the UE can perform gapless measurement and fulfil the measurement requirement when it is configured to measure only a serving cell. This may be the case, for example, when the UE is not configured with any report configuration, when the UE is only configured with report configuration for A1 or A2 event, or the UE is not configured to perform intra-frequency neighbor cell measurements.

In long term evolution (LTE), there can be various measurement report triggering events. These events include the following examples: A1, in which a serving cell becomes better than a threshold; A2, in which a serving cell becomes worse than a threshold; A3, in which a neighbor cell becomes offset better than a primary cell (PCell); A4, in which a neighbor cell becomes better than a threshold; A5, in which a PCell becomes worse than a first threshold and a neighbor cell becomes better than a second threshold; A6, in which a neighbor cell becomes offset better than a secondary cell (SCell); B1, in which an inter-radio access technology (RAT) neighbor cell becomes better than a threshold; B2, in which a PCell becomes worse than a first threshold and an inter-RAT neighbor cell becomes better than a second threshold; C1, in which a channel state information reference signal (CSI-RS) resource becomes better than a threshold; and C2, in which a CSI-RS resource becomes offset better than a reference CSI-RS resource.

Thus, the UE may not be configured with any reporting events related to intra-frequency neighbor cells. In this case, the UE can be forbidden to request gap-assisted measurements and may be able to fulfil measurement performance and reporting requirements.

Four alternative UE measurement behaviors can apply when the UE is only configured with measurements related to a serving cell. These alternatives may optionally be combined with one another. According to a first alternative, the UE can measure a single narrow band which is for MPDCCH monitoring. If frequency hopping is configured, the UE can measure the narrow band in the first subframe of an MPDCCH repetition.

There can be at least two options for defining the measurement requirement. According to a first option the measurement period can be defined as *Y*X.* The requirement can apply provided that during the measurement period UE has *Y* measurement/sampling opportunities, each separated by a some minimum time, for example at least *K* ms.

*X* can be the sampling interval. For example, *X* can be a fixed number 40 (assuming gap pattern 0), 80 (assuming gap pattern 1) or 800ms, or it can be an MPDCCH monitoring period, or it can be discontinuous reception (DRX) cycle if DRX is used. *Y* can be the number of samples needed to achieve the measurement accuracy. *K* can be the interval between sampling opportunities. For example, *K* can be a fixed number 40, or it can be the same as *X.*

According to a second option, the measurement period can be defined as a maximum between *Z* and the period during which the UE has monitored MPDCCH for *Y* times, where *Z* can be a fixed number, and, for example, *Z= Y*X.*

According to a second alternative, a UE can measure multiple narrow bands for MPDCCH monitoring and for PDSCH reception if the UE is scheduled with PDSCH. The UE can average over all resource elements (REs) from every sampling opportunity, no matter whether the sample comes from MPDCCH or PDSCH. The measurement period can be defined as *L*X*, where *L* can be a number of samples needed to achieve the measurement accuracy with possible measurement on multiple narrow bands. For example, *L=Y* or *2*Y.*

According to a third alternative, a UE can measure a single or multiple narrow bands for PDSCH reception. This can be done when the UE is configured with semi-persistent reception, which can be one possible configuration for VoIP. The measurement period can be defined as *Y**max(*X'*,40ms), where *X'* can be the period of semi-persistent reception.

According to a fourth alternative, a UE can measure a single narrow band, either the narrow band for MPDCCH monitoring or the narrow band for PDSCH reception. The UE can average over all REs from every sampling opportunity, but only from one narrow band. For example, the UE can average over all REs from MPDCCH or PDSCH. The measurement period can be defined as *Y*X.*

A capability can be defined to indicate whether the UE can do gapless measurement for serving cell. Also, the parameter *AlllowedMeasBw* may not apply to the gapless serving cell measurement.

Thus, certain aspects can enable a BL/CE UE to measure the serving cell without measurement gaps. Compared to the conventional measurement framework where the UE always needs gaps to perform intra-frequency measurement, even for serving cell only, the impact due to gaps can be avoided if the network configures the UE to only measure the serving cell.

Certain aspects of the measurement behavior and related requirement may allow the UE to have a sufficient number of sampling opportunities even the UE has re-tuning during the measurement period. The capability, according to certain aspects, can allow different UE implementation possibilities, while network can use the information to decide whether gaps should be configured to a specific UE.

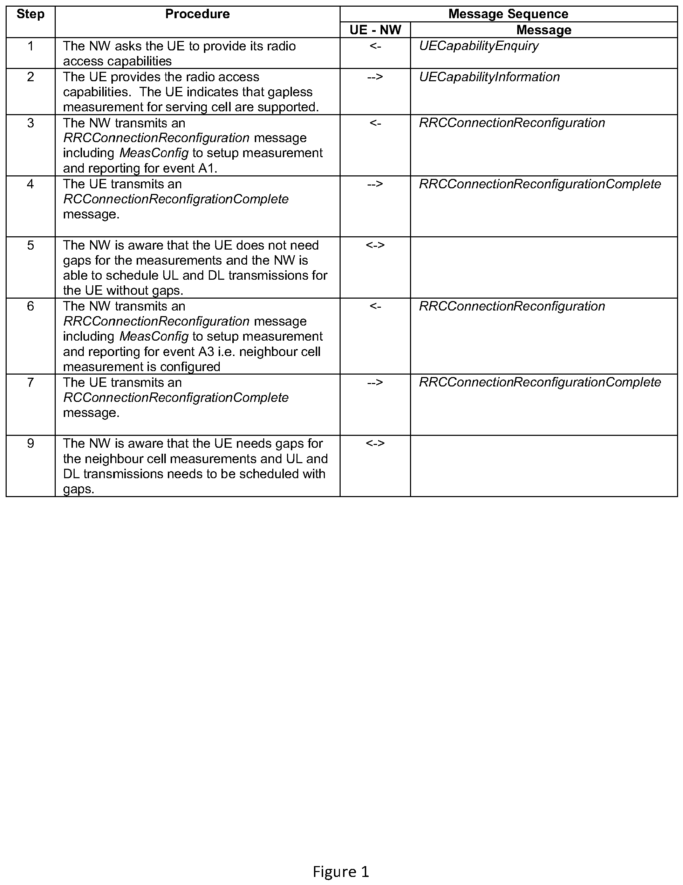

Figure 1 illustrates a signaling example, according to certain aspects. The following signaling example describes one possible way that certain aspects can be implemented in the UE and network (NW).

As shown in Figure 1, at step 1 the NW can ask the UE to provide the UE's radio access capabilities. This message may be referred to as *UECapabilityEnquiry.*

At step 2, the UE can provide the requested radio access capabilities. In some aspects, this provision can be in response to the received request to provide the UE's radio access capabilities. Alternatively, the UE can provide such capabilities automatically or autonomously. The UE can indicate that gapless measurement for the serving cell is supported. This message may be referred to as *UECapabilitylnformation.*

At step 3, the NW can transmit a radio resource control (RRC) connection reconfiguration message, *RRCConnectionReconfiguration*, including *MeasConfig* to set up measurement and reporting for event A1. At step 4, the UE can transmit an RRC connection reconfiguration complete message, *RRCConnectionReconfigurationComplete.*

At step 5, the NW can be aware that the UE does not need gaps for the measurements and that the NW is able to schedule UL and DL transmissions for the UE without gaps.

Subsequently, at step 6, the NW can transmit an *RRCConnectionReconfiguration* message including *MeasConfig* to set up measurement and reporting for event A3. Thus, neighbor cell measurement can be configured. Moreover, the UE can, at step 7, send an *RCConnectionReconfigrationComplete* message. Consequently, at step 8, the NW can be aware that the UE needs gaps for the neighbor cell measurements and that the UL and DL transmissions need to be scheduled with gaps.

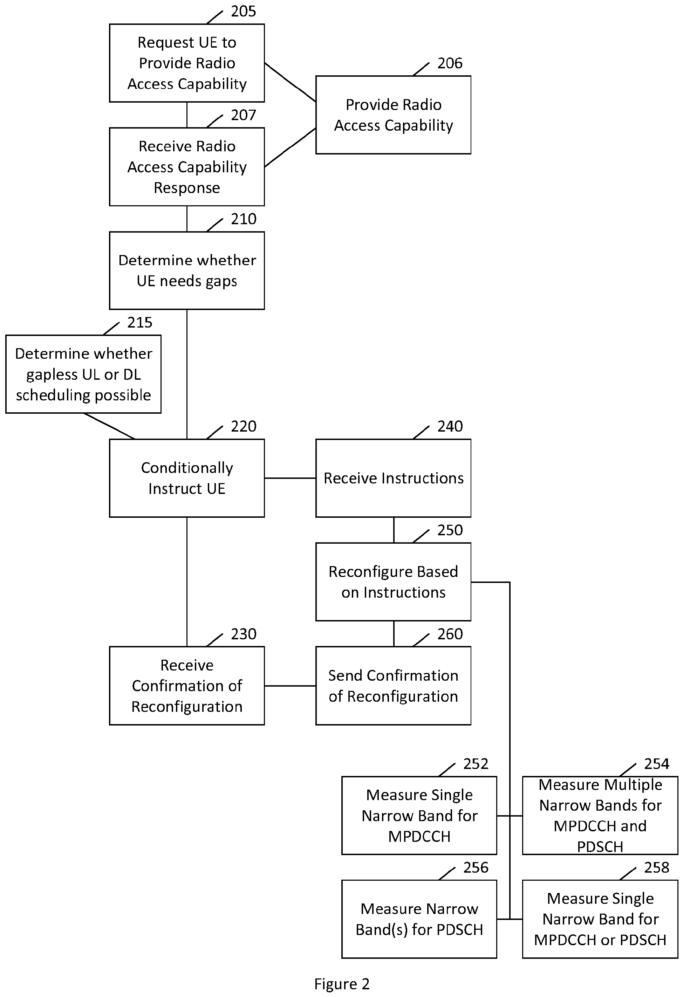

Figure 2 illustrates a method according to certain aspects. As shown in Figure 2, a method can include, at 205, requesting a user equipment to provide the user equipment's radio access capability, and receiving a response at 207.

The method can also include, at 206, providing an indication of a radio access capability of the user equipment to the serving cell. This can be the information requested at 205 and received at 207. The radio access capability can include support for gapless measurement for the serving cell.

The method can also include, at 210, determining whether a user equipment needs gaps for measurement. The determination at 210 can be based on whether the user equipment is configured to measure only a serving cell. The requested capability can serve as the basis for the determination of whether the user equipment needs gaps for measurement at 210. The method can also include, at 215, determining whether a serving cell is able to schedule uplink and downlink transmissions for the user equipment without gaps.

The method can further include, at 220, conditionally instructing the user equipment regarding gapless measurement based on the determination at 210. The instructions to the user equipment can be regarding gapless measurement for an identified event or any identified reporting configuration from which a user equipment can determine that the user equipment is not required to provide any measurement reporting for any neighbor cell. The conditionally instructing at 220 can be further based on the determination of whether the cell is able to schedule the uplink and downlink transmissions.

The method can further include, at 240, receiving instructions from a serving cell regarding performing gapless measurement. These can be the instructions sent at 220. The instructions can be for an identified reporting configuration from which UE can determine it is not required to provide any measurement reporting for any neighbor cell. The method can further include, at 250, reconfiguring measurement based on the instructions.

The reconfiguring can include, at 252, configuring the user equipment to measure a single narrow band which is for machine type communication physical downlink control channel. Alternatively, the reconfiguring can include, at 254, configuring the user equipment to measure multiple narrow bands for machine type communication physical downlink control channel monitoring and physical downlink shared channel reception when the user equipment is scheduled with physical downlink shared channel. As a further alternative, the reconfiguring can include, at 256, configuring the user equipment to measure a single narrow band or multiple narrow bands for physical downlink shared channel reception. As an additional alternative, the reconfiguring can include, at 258, configuring the user equipment to measure a single narrow band for one of machine type communication physical downlink control channel monitoring or physical downlink shared channel reception.

The method can further include, at 260, sending a confirmation from the user equipment that measurement has been reconfigured based on the instruction. Thus, the method can also include receiving, at 230, a confirmation from the user equipment that measurement has been reconfigured based on the instruction. This can be the same confirmation sent at 260.

Moreover, in certain aspects, when the UE indicates *intraFreq-CE-NeedForGaps-r13,* the UE may be allowed to turn on/off the UE's spare RF chain, or switch the RF BW between narrow band and wide band modes, to save power for intra-frequency measurement.

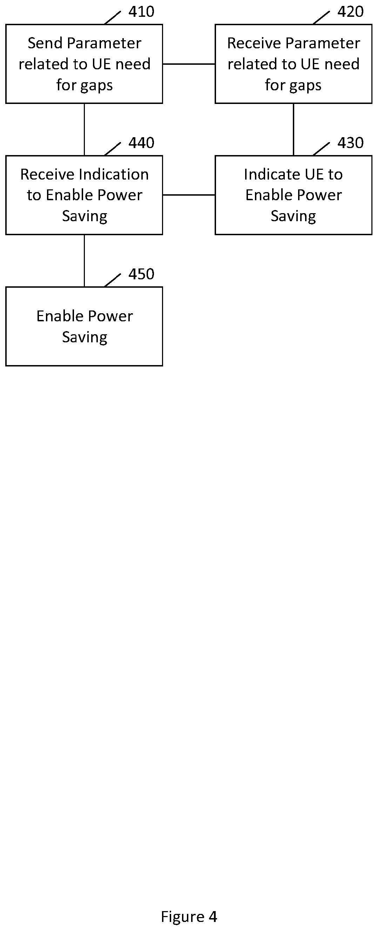

Figure 4 illustrates another method according, according to certain aspects. As shown in Figure 4, at 410 a user equipment can indicate a parameter that describes the need or lack thereof for gaps, such as *intraFreq-CE-NeedForGaps-r13.* This parameter can be received by a network at 420. In response, at the network can indicate, at 430, an indication to enable power saving to the user equipment. This indication can be received at 440. The user equipment can, accordingly, enable power saving at 450.

The indication may take the form of permission of a relaxed radio requirement or configuration of NCSG or burst gap, allowing the user equipment to turn on/off the UE's spare RF chain, or to switch the RF BW between narrow band and wide band modes, to save power for intra-frequency measurement, as mentioned above. Other options can relate to permitting a probability of missed ACK/NACK or the like, as discussed below by way of further examples.

If the UE is not configured with network controlled small gap (NCSG) or burst gap, and if the UE is configured to fulfil a relaxed measurement requirement for an intra-frequency neighbor cell, the UE may be allowed up to *Y*% probability of missed ACK/NACK, such as *Y*=0.5. The relaxed requirement can be defined assuming UE takes measurement samples every *X* ms, for example *X*=800 ms.

If the UE is not configured with network controlled small gap (NCSG) or burst gap, and if UE is configured to fulfil the current measurement requirement for intra-frequency neighbor cell, the UE should not cause any interruption.

Alternatively, the UE may be allowed up to *Y*% probability of missed ACK/NACK if UE is configured to be in CEModeB, or the UE is configured with a DRX cycle larger than*X* ms.

Thus, in certain aspects, if the UE is configured with NCSG or burst gap, or a combination of the gap types such as non-uniform NCSG, the UE may not be allowed to cause any interrupts. Thus, in such cases in certain aspects, missed acknowledgement (ACK) / negative acknowledgement (NACK) due to measurements may not be allowed.

Moreover, in certain aspects, a capability can be defined to indicate which case, the first case or the second case, as described above, the UE is supporting. This capability can be provided from a user equipment to the network, as mentioned above, at 410.

Additionally, in certain aspects when a user equipment (UE) indicates *intraFreq-CE-NeedForGaps-r13,* the measurement gaps may not be shared between intra-frequency and inter-frequency measurement, or the percentage of gaps allocated for intra-frequency measurement may always be zero.

Accordingly, certain aspects may enable a UE which does not need measurement gaps to perform intra-frequency neighbor cell measurement, to save power consumption when performing measurement. This can be done in a network controlled manner.

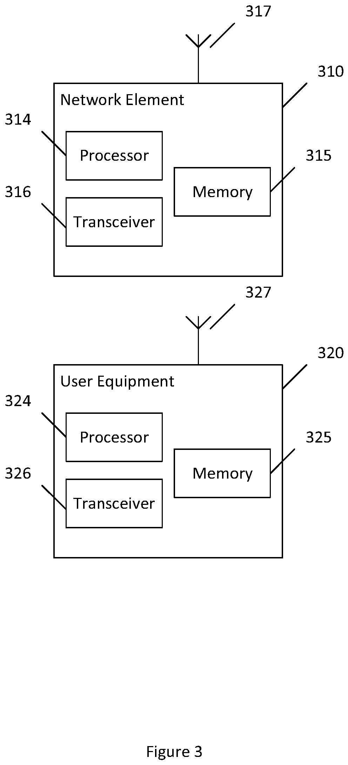

Figure 3 illustrates a system according to certain aspects of the disclosure. It should be understood that each block of the flowchart of Figure 1, Figure 2, or Figure 4 may be implemented by various means or their combinations, such as hardware, software, firmware, one or more processors and/or circuitry. In one aspect, a system may include several devices, such as, for example, network element 310 and user equipment (UE) or user device 320. The system may include more than one UE 320 and more than one network element 310, although only one of each is shown for the purposes of illustration. A network element can be an access point, a base station, an eNode B (eNB), next generation Node B (gNB) or any other network element, such as a primary cell (PCell) base station.

Each of these devices may include at least one processor or control unit or module, respectively indicated as 314 and 324. At least one memory may be provided in each device, and indicated as 315 and 325, respectively. The memory may include computer program instructions or computer code contained therein, for example for carrying out the aspects described above. One or more transceiver 316 and 326 may be provided, and each device may also include an antenna, respectively illustrated as 317 and 327. Although only one antenna each is shown, many antennas and multiple antenna elements may be provided to each of the devices. Other configurations of these devices, for example, may be provided. For example, network element 310 and UE 320 may be additionally configured for wired communication, in addition to wireless communication, and in such a case antennas 317 and 327 may illustrate any form of communication hardware, without being limited to merely an antenna.

Transceivers 316 and 326 may each, independently, be a transmitter, a receiver, or both a transmitter and a receiver, or a unit or device that may be configured both for transmission and reception. The transmitter and/or receiver (as far as radio parts are concerned) may also be implemented as a remote radio head which is not located in the device itself, but in a mast, for example. It should also be appreciated that according to the "liquid" or flexible radio concept, the operations and functionalities may be performed in different entities, such as nodes, hosts or servers, in a flexible manner. In other words, division of labor may vary case by case. One possible use is to make a network element to deliver local content. One or more functionalities may also be implemented as a virtual application that is provided as software that can run on a server.

A user device or user equipment 320 may be a mobile station (MS) such as a mobile phone or smart phone or multimedia device, a computer, such as a tablet, provided with wireless communication capabilities, personal data or digital assistant (PDA) provided with wireless communication capabilities, vehicle, portable media player, digital camera, pocket video camera, navigation unit provided with wireless communication capabilities or any combinations thereof. The user device or user equipment 320 may be a sensor or smart meter, or other device that may usually be configured for a single location.

In an exemplifying aspect, an apparatus, such as a node or user device, may include means for carrying out aspects described above in relation to Figure 1, Figure 2, and Figure 4.

Processors 314 and 324 may be embodied by any computational or data processing device, such as a central processing unit (CPU), digital signal processor (DSP), application specific integrated circuit (ASIC), programmable logic devices (PLDs), field programmable gate arrays (FPGAs), digitally enhanced circuits, or comparable device or a combination thereof. The processors may be implemented as a single controller, or a plurality of controllers or processors. Additionally, the processors may be implemented as a pool of processors in a local configuration, in a cloud configuration, or in a combination thereof. The term circuitry may refer to one or more electric or electronic circuits. The term processor may refer to circuitry, such as logic circuitry, that responds to and processes instructions that drive a computer.

For firmware or software, the implementation may include modules or units of at least one chip set (e.g., procedures, functions, and so on). Memories 315 and 325 may independently be any suitable storage device, such as a non-transitory computer-readable medium. A hard disk drive (HDD), random access memory (RAM), flash memory, or other suitable memory may be used. The memories may be combined on a single integrated circuit as the processor, or may be separate therefrom. Furthermore, the computer program instructions may be stored in the memory and which may be processed by the processors can be any suitable form of computer program code, for example, a compiled or interpreted computer program written in any suitable programming language. The memory or data storage entity is typically internal but may also be external or a combination thereof, such as in the case when additional memory capacity is obtained from a service provider. The memory may be fixed or removable.

The memory and the computer program instructions may be configured, with the processor for the particular device, to cause a hardware apparatus such as network element 310 and/or UE 320, to perform any of the processes described above (see, for example, Figure 1, Figure 2, and Figure 4). Therefore, in certain aspects, a non-transitory computer-readable medium may be encoded with computer instructions or one or more computer program (such as added or updated software routine, applet or macro) that, when executed in hardware, may perform a process such as one of the processes described herein. Computer programs may be coded by a programming language, which may be a high-level programming language, such as objective-C, C, C++, C#, Java, etc., or a low-level programming language, such as a machine language, or assembler. Alternatively, certain aspects of the disclosure may be performed entirely in hardware.

Furthermore, although Figure 3 illustrates a system including a network element 310 and a UE 320, aspects of the disclosure may be applicable to other configurations, and configurations involving additional elements, as illustrated and discussed herein. For example, multiple user equipment devices and multiple network elements may be present, or other nodes providing similar functionality, such as nodes that combine the functionality of a user equipment and an access point, such as a relay node.

Although certain aspects have been discussed with reference to MPDCHH, certain aspects may similarly be applied to any physical downlink control channel. Likewise, certain aspects are applied to PDSCH, but could also be applied to other downlink channels, regardless of the particular name of the channels. Thus, the names of the channels are simply by way of illustration and example and certain aspects can be applied to other channels with other names.

One having ordinary skill in the art will readily understand that the disclosure as discussed above may be practiced with steps in a different order, and/or with hardware elements in configurations which are different than those which are disclosed. Therefore, although the disclosure has been described based upon these preferred aspects, it would be apparent to those of skill in the art that certain modifications, variations, and alternative constructions would be apparent.

## Claims

1. A user equipment (320), comprising:
means for determining, by the user equipment (320), that the user equipment (320) does not need gaps to perform measurements; and
means for performing, by the user equipment (320), gapless measurements based on the determination,
wherein the determination comprises identifying that the user equipment (320) is not configured to perform intra-frequency neighbor cell measurements based on an identified reporting configuration.

2. The user equipment (320) of claim 1, wherein capability of the user equipment (320) to fulfil a gapless measurement requirement is taken into account in the determination.

3. The user equipment (320) of claim 2, wherein the capability of the user equipment (320) to fulfil gapless measurements comprises a capability to activate a spare radio frequency chain or a capability to widen a radio frequency band of a radio frequency chain.

4. The user equipment (320) of any of claims 1-3, further comprising:
means for receiving instructions from a serving cell regarding performing gapless measurements; and
means for reconfiguring measurement based on the instructions.

5. A method, comprising:
determining, by a user equipment (320), that the user equipment (320) does not need gaps to perform measurements; and
performing, by the user equipment (320), gapless measurements based on the determination,
wherein the determination comprises identifying that the user equipment (320) is not configured to perform intra-frequency neighbor cell measurements in a reporting configuration.

6. The method of claim 5, wherein a capability of the user equipment (320) to fulfil a gapless measurement requirement is taken into account in the determination.

7. The method of claim 6, wherein the capability of the user equipment (320) to fulfil gapless measurements comprises a capability to activate a spare radio frequency chain or a capability to widen a radio frequency band of a radio frequency chain.

8. The method of any of claims 5-7, further comprising:
receiving instructions from a serving cell regarding performing gapless measurements; and
reconfiguring measurement based on the instructions.

9. A computer program product encoding instructions which when executed by a user equipment, cause the user equipment to perform a process, the process comprising the method according to any of claims 5 to 8.

## Patentansprüche

1. Teilnehmereinrichtung (320), die Folgendes umfasst:
Mittel zum Bestimmen, dass die Teilnehmereinrichtung (320) keine Lücken benötigt, um Messungen durchzuführen, durch die Teilnehmereinrichtung (320); und
Mittel zum Durchführen von lückenlosen Messungen durch die Teilnehmereinrichtung (320) auf Basis der Bestimmung,
wobei die Bestimmung das Identifizieren auf Basis einer identifizierten Berichtsauslegung umfasst, dass die Teilnehmereinrichtung (320) nicht dazu ausgelegt ist, Messungen an Intrafrequenznachbarzellen durchzuführen.

2. Teilnehmereinrichtung (320) nach Anspruch 1, wobei eine Fähigkeit der Teilnehmereinrichtung (320), eine Anforderung für lückenlose Messungen zu erfüllen, bei der Bestimmung berücksichtigt wird.

3. Teilnehmereinrichtung (320) nach Anspruch 2, wobei die Fähigkeit der Teilnehmereinrichtung (320), lückenlose Messungen zu erfüllen, eine Fähigkeit zum Aktivieren einer Reservefunkfrequenzkette oder eine Fähigkeit zum Erweitern eines Funkfrequenzbandes einer Funkfrequenzkette umfasst.

4. Teilnehmereinrichtung (320) nach einem der Ansprüche 1 bis 3, die ferner Folgendes umfasst:
Mittel zum Empfangen von Anweisungen von einer bedienenden Zelle, die das Durchführen von lückenlosen Messungen betreffen; und
Mittel zum Neuauslegen einer Messung auf Basis der Anweisungen.

5. Verfahren, das Folgendes umfasst:
Bestimmen, dass eine Teilnehmereinrichtung (320) keine Lücken benötigt, um Messungen durchzuführen, durch die Teilnehmereinrichtung (320); und
Durchführen von lückenlosen Messungen durch die Teilnehmereinrichtung (320) auf Basis der Bestimmung,
wobei die Bestimmung das Identifizieren auf Basis einer Berichtsauslegung umfasst, dass die Teilnehmereinrichtung (320) nicht dazu ausgelegt ist, Messungen an Intrafrequenznachbarzellen durchzuführen.

6. Verfahren nach Anspruch 5, wobei eine Fähigkeit der Teilnehmereinrichtung (320), eine Anforderung für lückenlose Messungen zu erfüllen, bei der Bestimmung berücksichtigt wird.

7. Verfahren nach Anspruch 6, wobei die Fähigkeit der Teilnehmereinrichtung (320), lückenlose Messungen zu erfüllen, eine Fähigkeit zum Aktivieren einer Reservefunkfrequenzkette oder eine Fähigkeit zum Erweitern eines Funkfrequenzbandes einer Funkfrequenzkette umfasst.

8. Verfahren nach einem der Ansprüche 5 bis 7, das ferner Folgendes umfasst:
Empfangen von Anweisungen von einer bedienenden Zelle, die das Durchführen von lückenlosen Messungen betreffen; und
Neuauslegen einer Messung auf Basis der Anweisungen.

9. Computerprogrammprodukt das Anweisungen codiert, die, wenn sie von einer Teilnehmereinrichtung ausgeführt werden, die Teilnehmereinrichtung veranlassen, einen Prozess durchzuführen, wobei der Prozess das Verfahren gemäß einem der Ansprüche 5 bis 8 umfasst.

## Revendications

1. Équipement utilisateur (320), comprenant :
des moyens pour déterminer, par l'équipement utilisateur (320), que l'équipement utilisateur (320) n'a pas besoin d'intervalles pour effectuer des mesures ; et
des moyens pour réaliser, par l'équipement utilisateur (320), des mesures sans intervalle sur la base de la détermination,
dans lequel la détermination comprend l'identification du fait que l'équipement utilisateur (320) n'est pas configuré pour réaliser des mesures de cellule voisine intra-fréquence sur la base d'une configuration de rapport identifiée.

2. Équipement utilisateur (320) selon la revendication 1, dans lequel la capacité de l'équipement utilisateur (320) à satisfaire une exigence de mesure sans intervalle est prise en compte dans la détermination.

3. Équipement utilisateur (320) selon la revendication 2, dans lequel la capacité de l'équipement utilisateur (320) à satisfaire des mesures sans intervalles comprend la capacité d'activer une chaîne de radiofréquences de remplacement ou la capacité d'élargir une bande de radiofréquences d'une chaîne de radiofréquences.

4. Équipement utilisateur (320) selon l'une des revendications 1 à 3, comprenant en outre :
des moyens pour recevoir des instructions d'une cellule de desserte concernant la réalisation de mesures sans intervalles ; et
des moyens pour reconfigurer les mesures sur la base des instructions.

5. Procédé, comprenant les étapes suivantes :
déterminer, par un équipement utilisateur (320), que l'équipement utilisateur (320) n'a pas besoin d'intervalles pour effectuer des mesures ; et
réaliser, par l'équipement utilisateur (320), des mesures sans intervalle sur la base de la détermination,
dans lequel la détermination comprend l'identification du fait que l'équipement utilisateur (320) n'est pas configuré pour réaliser des mesures de cellule voisine intra-fréquence dans une configuration de rapport.

6. Procédé selon la revendication 5, dans lequel la capacité de l'équipement utilisateur (320) à satisfaire une exigence de mesure sans intervalle est prise en compte dans la détermination.

7. Procédé selon la revendication 6, dans lequel la capacité de l'équipement utilisateur (320) à satisfaire des mesures sans intervalles comprend la capacité d'activer une chaîne de radiofréquences de remplacement ou la capacité d'élargir une bande de radiofréquences d'une chaîne de radiofréquences.

8. Procédé selon l'une des revendications 5 à 7, comprenant en outre les étapes suivantes :
recevoir des instructions d'une cellule de desserte concernant la réalisation de mesures sans intervalles ; et
reconfigurer les mesures sur la base des instructions.

9. Produit de programme informatique codant des instructions qui, lorsqu'elles sont exécutées par un équipement utilisateur, amènent l'équipement utilisateur à effectuer un processus, le processus comprenant le procédé selon l'une des revendications 5 à 8.
